# EUROPEAN PATENT APPLICATION

(11) **EP 4 280 119 A1**
(43) Date of publication of application: **22.11.2023**
(21) Application number: 21919379.4
(22) Date of filing: 15.01.2021
(51) Int. Cl.: G06N 5/00, G06N 20/00

(54) **RULE UPDATE PROGRAM, RULE UPDATE METHOD, AND RULE UPDATE DEVICE**

(71) Applicant: FUJITSU LIMITED, Kawasaki-shi, Kanagawa 211-8588 (JP)
(72) Inventor: IWASHITA, Hiroaki, Kawasaki-shi, Kanagawa 211-8588 (JP)
(74) Representative: Hoffmann Eitle
(86) International application number: PCT/JP2021/001273
(87) International publication number: WO 2022/153486

(57) **Abstract**

A rule update program causes a computer to execute a process including: accepting user specification for at least a part of rules included in a rule set generated as a result of first mining that uses training data; detecting, from the training data, sample data that corresponds to the rules for which the user specification has been accepted; and acquiring a new rule by executing second mining by using the training data limited to the sample data that corresponds to the rules for which the user specification has been accepted.

## Description

### FIELD

The present disclosure relates to a rule update program, a rule update method, and a rule update device.

### BACKGROUND

A machine learning model based on a rule set has been proposed from the aspect of achieving artificial intelligence (AI) capable of explanation, which is so-called explainable AI (XAI).

To generate the above-mentioned machine learning model, a sample set of training data including features corresponding to each of a plurality of items representing a property of data, and particular labels is used as a dataset. Using the dataset of the training data, mining is executed to extract a rule set having a high importance level, from a rule set exhaustively listing combination patterns obtained by combining numerical values that can be taken by the features corresponding to the items, between the items. Then, each of the rules included in the rule set obtained by mining is employed as explanatory variables for the machine learning model, the labels are employed as objective variables for the machine learning model, and weights to be assigned to each rule are determined by machine learning such as regression analysis.

For example, when a task such as classification or prediction is executed using the machine learning model based on a rule set, a rule set contributing to the output result can be presented in addition to the output result of the machine learning model. The rule set presented in this manner can be expressed by a logical expression and therefore has an aspect of providing excellent interpretability (explainability).

Additionally, a method of listing a plurality of linear regression models has been proposed from the aspect of enhancing the reasonableness to a user. For example, the features included in the linear regression model are exchanged one by one to generate a model with the same degree of accuracy, or the feature set used in the linear regression model is entirely replaced with another one to generate a model with the same degree of accuracy.

### SUMMARY

### TECHNICAL PROBLEM

However, the rule set described above does not necessarily include only a rule that can make the user feel reasonable and has the aspect that rules that are unlikely to make the user feel reasonable are mixed. For this reason, the above machine learning model based on the rule set is excellent in interpretability but has another characteristic of not providing satisfactory reasonableness.

Nevertheless, it is also difficult to procure a rule set in which the number of rules that are unlikely to make the user feel reasonable is reduced, using the method of listing a plurality of linear regression models. This is because the method of listing a plurality of linear regression models is merely a technique on the premise of a linear regression model that assigns weights to individual features, and therefore it is difficult to directly apply the method to a machine learning model in which weights are assigned to rules.

In one aspect, an object is to provide a rule update program, a rule update method, and a rule update device capable of achieving enhancement in reasonableness of a machine learning model based on a rule set.

### SOLUTION TO PROBLEM

In one aspect, a rule update program causes a computer to execute a process including: accepting user specification for at least a part of rules included in a rule set generated as a result of first mining that uses training data; detecting, from the training data, sample data that corresponds to the rules for which the user specification has been accepted; and acquiring a new rule by executing second mining by using the training data limited to the sample data that corresponds to the rules for which the user specification has been accepted.

### ADVANTAGEOUS EFFECTS OF INVENTION

Enhancement in the reasonableness of a machine learning model based on a rule set may be achieved.

### BRIEF DESCRIPTION OF DRAWINGS

FIG. 1 is a block diagram illustrating a functional configuration example of a server device according to a first embodiment;
FIG. 2 is a diagram illustrating an example of a method of generating a machine learning model;
FIG. 3 is a diagram illustrating an example of a rule update method;
FIG. 4 is a diagram illustrating an example of a sample set of training data;
FIG. 5 is a diagram illustrating an example of a sample set of training data;
FIG. 6 is a diagram illustrating an example of a set of initial rules;
FIG. 7 is a diagram illustrating an example of first model data;
FIG. 8 is a diagram illustrating an example of re-mining of positive rules;
FIG. 9 is a diagram illustrating an example of new rules;
FIG. 10 is a diagram illustrating an example of second model data;
FIG. 11 is a flowchart illustrating a procedure of rule update processing according to the first embodiment; and
FIG. 12 is a diagram illustrating a hardware configuration example.

### DESCRIPTION OF EMBODIMENTS

Hereinafter, a rule update program, a rule update method, and a rule update device according to the present application will be described with reference to the accompanying drawings. Note that the present embodiments do not limit the disclosed technique. Then, the embodiments can be appropriately combined with each other within a range that does not cause contradiction between processing contents.

### [First Embodiment]

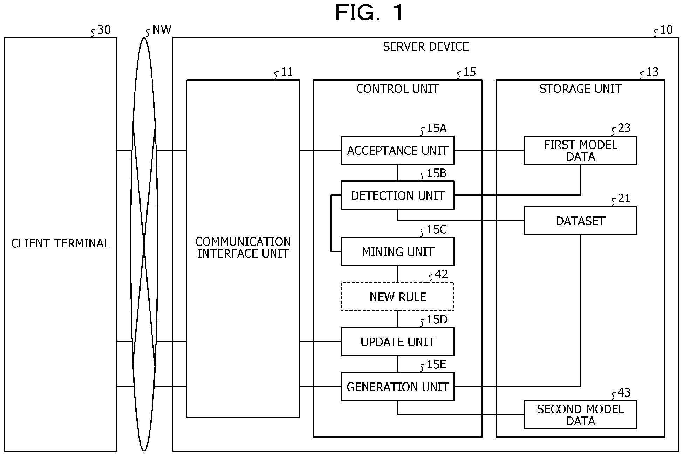

FIG. 1 is a block diagram illustrating a functional configuration example of a server device 10 according to a first embodiment. The server device 10 illustrated in FIG. 1 is configured to provide a rule update function for updating a rule that is unlikely to make a user feel reasonable, to a new alternative rule, in a rule set used to generate a machine learning model.

Such a rule update function can be packaged as one function of a model generation service for generating a machine learning model based on a rule set, merely as one aspect. Note that the above rule update function does not necessarily have to be packaged in the above-mentioned model generation service and may be provided as one of modules included in a library referred to by the above model generation service or another service.

The server device 10 can be implemented by installing the rule update program that achieves the above rule update function in any computer. As an example, the server device 10 can be implemented as a server that provides the above rule update function on-premises. As another example, the server device 10 can also be implemented as a software as a service (SaaS) type application to provide the above rule update function as a cloud service.

In addition, as illustrated in FIG. 1, the server device 10 can be coupled to a client terminal 30 via a network NW so as to enable communication. For example, the network NW can be any type of communication network such as the Internet or a local area network (LAN) regardless of whether the network NW is wired or wireless.

The client terminal 30 is an example of a computer provided with the above rule update function. For example, a desktop-type computer such as a personal computer, or the like can correspond to the client terminal 30. This is merely an example, and the client terminal 30 can be any computer such as a laptop-type computer, a mobile terminal device, or a wearable terminal.

Note that, although FIG. 1 gives an example in which the above rule update function is provided by a client-server system, this example is not restrictive, and the above rule update function may be provided in a standalone manner.

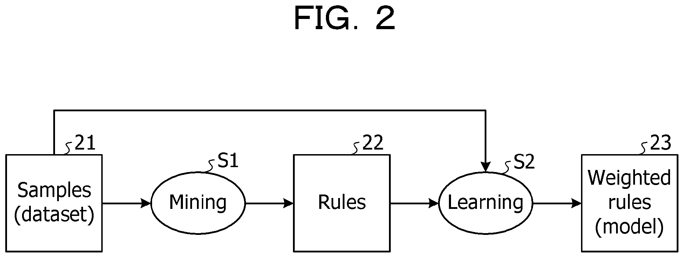

Next, a method of generating a machine learning model based on a rule set according to the present embodiment will be exemplified. FIG. 2 is a diagram illustrating an example of a method of generating a machine learning model. A dataset 21 of training data illustrated in FIG. 2 can include a sample set of training data including features corresponding to each of a plurality of items representing a property of data, and particular labels. Note that, in FIG. 2, an example of generating a machine learning model that performs class classification will be given as an example of a task of machine learning.

As illustrated in FIG. 2, using the dataset 21 of the training data, mining is executed to extract a rule set having a high importance level, from a rule set exhaustively listing combination patterns obtained by combining numerical values that can be taken by the features corresponding to the items, between the items (S1).

In the mining in step S1, all possible combination patterns can be listed as a rule set by including all numbers from two to the number of items included in the training data, as the number of items for combining numerical values of the features. Note that, although an example in which all possible combination patterns are listed has been given here, the number of items for combining numerical values of the features may be restricted to an upper limit value set by user definition or system definition.

After that, in the mining in step S1, the rule set obtained by exhaustively listing as described above is assumed as a population, and a rule set having a high importance level is extracted from the rule set assumed as the population.

For example, the "importance level" can be defined by indices such as a support level (Support) and a confidence level (Confidence), merely as an example.

"Support" refers to a ratio of the number of samples that get hits for the condition part of the rule to be extracted in mining, to the number of samples included in the dataset of the training data, or a frequency of the number of samples that get hits for the condition part of the rule to be extracted in mining. "Support" is sometimes also called the number of hits.

"Confidence" refers to the number of samples that can be classified into a class matching the label of the conclusion part of the rule to be extracted in mining, among the number of samples that get hits for the condition part of the rule. "Confidence" is sometimes also called reliability or a hit rate.

The lower limit value of each of these "Support" and "Confidence" is set as a hyperparameter of the machine learning model by user definition or system definition.

In the mining in step S1, a rule set 22 in which "Support" is equal to or higher than the lower limit value and "Confidence" is equal to or higher than the lower limit value is extracted. This enables, as one aspect, to procure a rule set that achieves classification into classes as expected with a sufficient number of samples. Hereinafter, the rule initially extracted in the mining in step S1 will be sometimes referred by the term "initial rule".

Each of the rules included in the set 22 of the initial rules obtained by the mining in step S1 is employed as explanatory variables for the machine learning model, the labels for each sample are employed as objective variables for the machine learning model, and weights to be assigned to each rule are determined by machine learning such as regression analysis (S2).

As a result of the machine learning in step S2, a rule set to which weights of the rules are assigned for each of the rules is obtained as a machine learning model 23.

According to the machine learning model 23 generated in this manner, the rule set contributing to the output result may be presented in addition to the output result of the machine learning model. The rule set presented in this manner can be expressed by a logical expression and therefore has an aspect of providing excellent interpretability (explainability).

However, the rule set described above does not necessarily include only a rule that can make the user feel reasonable and has another characteristic in which rules that are unlikely to make the user feel reasonable are mixed. For this reason, the above machine learning model based on the rule set is excellent in interpretability but has another characteristic of not providing satisfactory reasonableness.

Nevertheless, it is also difficult to procure a rule set in which the number of rules that are unlikely to make the user feel reasonable is reduced, using Non-Patent Documents 1 and 2 mentioned above in the background art section, that is, the method of listing a plurality of linear regression models.

This is because Non-Patent Documents 1 and 2 treat merely a technique on the premise of a linear regression model that assigns weights to individual features, and therefore it is difficult to directly apply Non-Patent Documents 1 and 2 to a machine learning model in which weights are assigned to rules.

As one of the reasons why the application is difficult as described above, the fact that the number of rules increases exponentially as the number of items or the range that can be taken by the numerical values of the features corresponding to the items becomes greater can be mentioned.

That is, if the number of rules increases exponentially, it becomes difficult to keep down the calculation cost to a realistic level, including, for example, the calculation amount and the calculation time for machine learning such as regression analysis executed from the aspect of determining the weight of each rule.

Furthermore, even if the calculation cost of machine learning is kept down by mining, the rule that is not extracted at the stage of mining and is excluded is also not included in the explanatory variables for the machine learning model. For this reason, a rule that provides high reasonableness to the user is buried in mining, and the possibility that a machine learning model that provides higher reasonableness is listed is lessened.

Thus, the rule update function according to the present embodiment executes re-mining to procure a new rule that is an alternative to the initial rule, in the sample set of the training data used to generate the machine learning model, exclusively for a sample corresponding to the initial rule for which the user specification has been accepted.

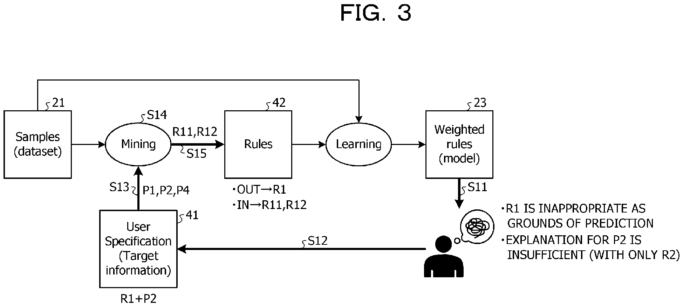

FIG. 3 is a diagram illustrating an example of the rule update method. FIG. 3 illustrates an example in which a rule that is unlikely to make the user feel reasonable, in the set of initial rules used to generate the machine learning model illustrated in FIG. 2, is updated to a new alternative rule. Note that, in FIG. 3, the arrow of a flow relating to processing corresponding to rule update is indicated by a thick line.

As illustrated in FIG. 3, the rule update function can present the machine learning model 23 generated as illustrated in FIG. 2, such as a set of initial rules to which weights of the initial rules are assigned for each initial rule, to the client terminal 30 via a graphical user interface (GUI) (S11).

When the set of initial rules is presented in this manner, the rule update function can accept specification of a rule that is unlikely to make the user understand or feel reasonable, as an example of user specification 41 (S12). Merely as an example, a rule against intuition or an empirical rule of the user, common knowledge of business to which the machine learning model 23 is applied, or the like, a rule in which a combination of features included in the condition part and the label of the conclusion part include a discriminatory expression, or the like can be specified. As another example of the user specification, the rule update function can also accept specification of a sample of the training data that the machine learning model 23 is not capable of sufficiently explaining, as well as the above specification of the rule.

In the case of the example of the user specification 41 illustrated in FIG. 3, an example is illustrated in which a rule R1 is specified under the idea that "the rule R1 is inappropriate as grounds of prediction", and also a sample P2 is specified under the idea that "the explanation for the sample P2 is insufficient (with only the rule R2)".

When the user specification is accepted in step S12, the rule update function detects the sample of the training data corresponding to the rule for which the user specification 41 has been accepted (S13). For example, in the case of the example illustrated in FIG. 3, samples P1 and P4 of the training data that match the combination pattern of the features included in the condition part of the rule R1 for which the user specification 41 has been accepted are detected from the sample set included in the dataset 21 of the training data.

Thereafter, the rule update function executes re-mining exclusively for the samples P1 and P4 of the training data detected in step S13 and the sample P2 of the training data for which the user specification has been accepted in step S12 (S14).

By executing the re-mining limited to the samples P1, P2, and P4 of the training data in step S14, a new rule that is an alternative to the rule R1 that is an initial rule, and furthermore, a new rule that supplements the explanation of the sample P2 are extracted as rules R11 and R12.

As a result of the re-mining in step S14, the rule update function can update the set of initial rules as follows (S15). For example, in the case of the example illustrated in FIG. 3, the set 22 of initial rules is updated to an updated rule set 42 by deleting the rule R1, which is one of the initial rules, from the set 22 of initial rules, and also adding the rules R11 and R12 extracted as new rules.

As described above, the rule update function according to the present embodiment can procure a new rule that is an alternative to a rule that is unlikely to make the user understand or feel reasonable. Therefore, according to the rule update function according to the present embodiment, enhancement in reasonableness of the machine learning model based on a rule set may be achieved. Furthermore, the rule update function according to the present embodiment can procure a new rule that supplements the explanation of the sample of the training data for which the explanation from the machine learning model is insufficient. For this reason, according to the rule update function according to the present embodiment, interpretability (explainability) of the machine learning model based on a rule set may be further raised.

Note that, although the description has been given in FIG. 3 until the set 22 of initial rules is updated to the updated rule set 42, as a matter of course, a machine learning model 43 based on the updated rule set 42 can be generated. In this case, each of the rules included in the updated rule set 42 is employed as explanatory variables for the machine learning model, the labels are employed as objective variables for the machine learning model, and weights to be assigned to each rule are determined by machine learning such as regression analysis. This allows the machine learning model 43 based on the updated rule set 42 to be generated.

Next, an example of the functional configuration of the server device 10 having the rule update function according to the present embodiment will be described. In FIG. 1, blocks corresponding to functions included in the server device 10 are schematically depicted. As illustrated in FIG. 1, the server device 10 includes a communication interface unit 11, a storage unit 13, and a control unit 15. Note that FIG. 1 merely illustrates an excerpt of functional units related to the rule update function described above, and a functional unit other than the illustrated ones, such as a functional unit that an existing computer is equipped with by default or as an option, may be provided in the server device 10.

The communication interface unit 11 corresponds to an example of a communication control unit that controls communication with another device such as the client terminal 30. Merely as an example, the communication interface unit 11 is achieved by a network interface card such as a LAN card. For example, the communication interface unit 11 accepts a request relating to rule update, the user specification 41 such as specification of a rule or a sample, or the like from the client terminal 30. In addition, the communication interface unit 11 outputs the updated rule set 42 or the machine learning model 43 based on the updated rule set 42 to the client terminal 30.

The storage unit 13 is a functional unit that stores various types of data. Merely as an example, the storage unit 13 can be achieved by a storage such as an internal, external, or auxiliary storage. For example, the storage unit 13 stores the dataset 21, first model data 23, and second model data 43. Note that, apart from the dataset 21, the first model data 23, and the second model data 43, the storage unit 13 can store various types of data such as settings referred to by the above rule update function, such as hyperparameters of the machine learning model.

The dataset 21 can correspond to an example of the sample set 21 of the training data illustrated in FIGs. 2 and 3. Both of the first model data 23 and the second model data 43 are data of a machine learning model based on a rule set. The first model data 23 can correspond to the machine learning model 23 based on the set 22 of initial rules illustrated in FIG. 2, while the second model data 43 can correspond to the machine learning model 43 based on the updated rule set 42 illustrated in FIG. 3.

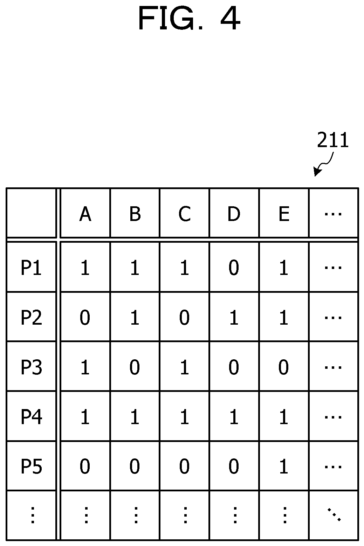

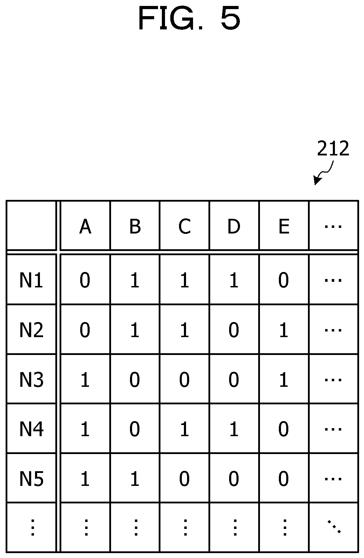

FIGs. 4 and 5 are diagrams illustrating examples of the sample set of the training data. FIGs. 4 and 5 illustrate sample sets 211 and 212 of training data used for generating a machine learning model that performs two-class classification as an example of a task of machine learning. Note that, although an example of generating a machine learning model that performs two-class classification will be given here, the task of machine learning is not limited to two-class classification and may be multi-class classification, or may be another task apart from class classification, such as prediction as an example.

For example, FIG. 4 exemplifies the positive sample set 211 of the training data, that is, the sample set 211 to which the label of a positive "+" is assigned, while FIG. 5 illustrates the negative sample set 212 of the training data, that is, the sample set 212 to which the label of a negative "-" is assigned.

Furthermore, FIGs. 4 and 5 exemplify five items A to E as an example of the items and illustrate an example in which the feature corresponding to each item is expressed by a binary of "1" or "0".

The "item" mentioned here may be any item, but age, gender, and the like are given merely as examples for explanation. For example, in the case of the example of the age, "1" is extracted as the feature of a sample of which the item "age" has 20 years old or older, while "0" is extracted as the feature of a sample of which the item "age" has an age younger than 20 years old. In addition, in the case of the example of the gender, "1" is extracted as the feature of a sample of which the item "gender" has male, while in the case of the example of the gender, "0" is extracted as the feature of a sample of which the item "gender" has female. Note that FIGs. 4 and 5 have given an example in which the feature is expressed in binary, but the feature may be expressed in a multivalue of a ternary or more value. For example, in the case of the age, the whole numerical value of age can be assumed as the feature. Additionally, it is also possible to extract "0" as the feature of a sample of which the item "age" has an age younger than 10 years old, extract "1" as the feature of a sample of which the item "age" has 10-something years old,..., and extract "N" as the feature of a sample of which the item "age" has N × 10-something years old.

For example, FIG. 4 illustrates five cases of samples P1 to P5 as an example of the positive sample set 211 of the training data. Merely as an example, the sample P1 taken as an example is a case where the label of the positive "+" is assigned and means that the respective features of the items "A" to "E" have "1", "1", "1", "0", and "1".

In addition, FIG. 5 illustrates five cases of samples N1 to N5 as an example of the negative sample set 212 of the training data. Merely as an example, the sample N1 taken as an example is a case where the label of the negative "-" is assigned and means that the respective features of the items "A" to "E" have "0", "1", "1", "1", and "0".

The positive sample set 211 of the training data illustrated in FIG. 4 and the negative sample set 212 of the training data illustrated in FIG. 5 are used for generating the machine learning model as the dataset 21 of the training data.

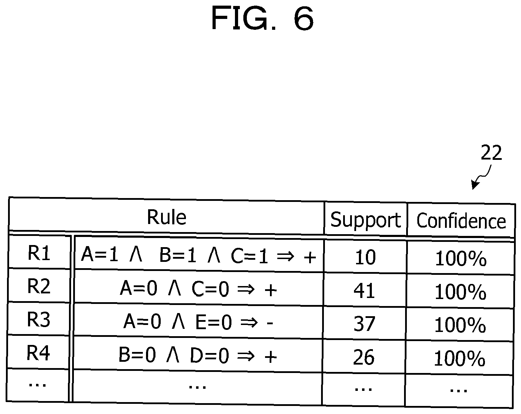

For example, by executing the mining in step S1 illustrated in FIG. 2 on the rule set obtained by exhaustively listing, using the dataset 21 of the training data illustrated in FIGs. 4 and 5, the set of initial rules illustrated in FIG. 6 is obtained.

FIG. 6 is a diagram illustrating an example of the set of initial rules. FIG. 6 exemplifies a set of initial rules obtained by executing mining under circumstances in which the lower limit value of "Support" is set to "10" and also the lower limit value of "Confidence" is set to "100%", merely as an example.

As illustrated in FIG. 6, four initial rules of rules R1 to R4 are illustrated as a set of initial rules. In the case of the example illustrated in FIG. 6, the rule includes the condition part corresponding to the left side of the right arrow and the conclusion part corresponding to the right side of the right arrow.

For example, a combination pattern of features denoting that the feature of the item "A" has "1", the feature of the item "B" has "1", and the feature of the item "C" has "1" is defined in the condition part of the rule R1. In addition, the class of the positive "+" that occurs under the event defined in the condition part is defined in the conclusion part of the rule R1.

Such a rule R1 is extracted as one for the set of initial rules because the rule R1 satisfies the mining condition that Support "10" is equal to or higher than the lower limit value "10" and Confidence "100%" is equal to or higher than the lower limit value "100%".

Each of the rules included in the set of the initial rules illustrated in FIG. 6 is employed as explanatory variables for the machine learning model, the labels for each sample are employed as objective variables for the machine learning model, and weights to be assigned to each rule are determined by regression analysis in step S2 illustrated in FIG. 2, such as logistic regression as an example.

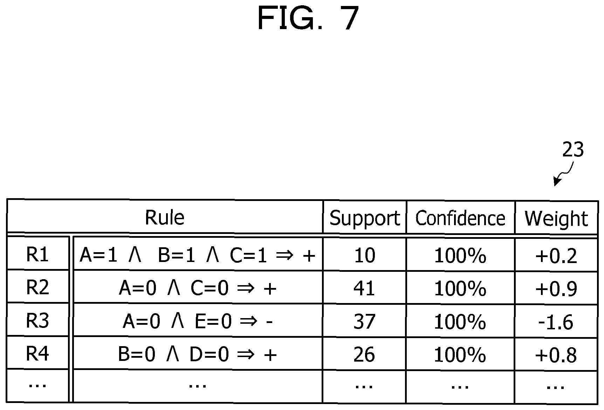

FIG. 7 is a diagram illustrating an example of the first model data. As an example of the machine learning model 23 based on the set 22 of initial rules, FIG. 7 illustrates a rule set to which weights of four initial rules of rules R1 to R4 are assigned for each of the initial rules. Such a machine learning model 23 can function as a multiple regression model in which each of the rules R1 to R4 is employed as explanatory variables and the weights assigned to each rule are employed as partial regression coefficients, merely as an example.

For example, a verification result as to whether or not the features corresponding to the items "A" to "E" included in the input data satisfy the condition part of each rule of the rules R1 to R4 can be input to the machine learning model 23 based on the rules R1 to R4.

Among the four explanatory variables of the rules R1 to R4, "1" is input to the explanatory variable satisfying the condition part of the rule, while "0" is input to the explanatory variable not satisfying the condition part of the rule, whereby the total sum of the weightings is output from the machine learning model 23.

At this time, when the total sum of the weightings output by the machine learning model 23 is equal to or greater than zero, the input data is classified into the class of positive examples, that is, the class of the positive "+". On the other hand, when the total sum of the weightings is smaller than zero, the input data is classified into the class of negative examples, that is, the class of the negative "-".

The machine learning model 23 based on such a set 22 of initial rules can be saved in the storage unit 13 as the first model data 23. Note that the description of the second model data 43 will be given later together with the description of the processing for generating the second model data 43.

The control unit 15 is a processing unit that takes overall control of the server device 10. For example, the control unit 15 is achieved by a hardware processor. As illustrated in FIG. 1, the control unit 15 includes an acceptance unit 15A, a detection unit 15B, a mining unit 15C, an update unit 15D, and a generation unit 15E. Note that, although FIG. 1 exemplifies the functional units corresponding to the model generation service in which the rule update function is packaged, only the functional units corresponding to the rule update function may be provided.

The acceptance unit 15A is a processing unit that accepts various types of information. As one form of embodiment, the acceptance unit 15A can accept a request relating to rule update from the client terminal 30. At this time, when accepting the request relating to the rule update, the acceptance unit 15A displays, on the client terminal 30, the machine learning model included in the first model data 23 stored in the storage unit 13, such as a machine learning model based on the set of initial rules.

Merely as an example, the acceptance unit 15A can display, on the client terminal 30, a machine learning model based on the rules R1 to R4 illustrated in FIG. 7. Note that FIG. 7 illustrates an example in which the respective items are masked with the symbols of A to E, but it goes without saying that, in practice, values of any items, as well as the gender and the age, can be displayed.

When the machine learning model based on the rules R1 to R4 illustrated in FIG. 7 is presented in this manner, the acceptance unit 15A can accept, as an example of the user specification 41, specification of a rule that is unlikely to make the user understand or feel reasonable. Merely as an example, a rule against intuition or an empirical rule of the user, common knowledge of business to which the machine learning model 23 is applied, or the like, a rule in which a combination of features included in the condition part and the label of the conclusion part include a discriminatory expression, or the like can be specified. For example, as exemplified by the user specification 41 illustrated in FIG. 3, the user specification of the rule R1 can be accepted under the idea that "the rule R1 is inappropriate as grounds of prediction".

As another example, the acceptance unit 15A can display, on the client terminal 30, the dataset 21 including the positive samples of the training data illustrated in FIG. 4, the negative samples of the training data illustrated in FIG. 5, or both of these samples. Note that FIGs. 4 and 5 illustrate examples in which the respective items are masked with the symbols of A to E, but it goes without saying that, in practice, values of any items, as well as the gender and the age, can be displayed.

When such sample presentation is performed, the acceptance unit 15A can also accept specification of a sample of the training data that the machine learning model illustrated in FIG. 7 is not capable of sufficiently explaining, as an example of the user specification. For example, from the aspect of aiding the specification of a sample, when the positive samples of the training data illustrated in FIG. 4 or the negative samples of the training data illustrated in FIG. 5 are presented, the rules supported by each sample can be displayed in association with each other. Merely as an example, when the mouseover is performed on any sample among the samples of the training data, a rule supporting the sample on which the mouseover is performed can be displayed. For example, as exemplified by the user specification 41 illustrated in FIG. 3, the user specification of the sample P2 can be accepted under the idea that "the explanation for the sample P2 is insufficient (with only the rule R2)". Note that the rule displayed at the time of mouseover may be identification information on the rule instead of the whole rule.

Note that, although an example in which the user specification is accepted after the machine learning model and the samples of the training data are presented has been given here, the user specification may be accepted by skipping the presentation of the machine learning model and the samples of the training data. In addition, as the user specification, both of the specification of the rule and the specification of the sample of the training data do not necessarily have to be accepted, and at least any one of the specifications can be accepted.

The detection unit 15B is a processing unit that detects the sample of the training data corresponding to the rule for which the user specification has been accepted. As one form of embodiment, the detection unit 15B detects the sample of the training data that matches the combination pattern of the features included in the condition part of the rule for which the user specification 41 has been accepted, from the sample set included in the dataset 21 of the training data. For example, when the user specification of the rule R1 is accepted, the condition part of the rule R1 in the set 22 of initial rules included in the first model data 23 is referred to. As illustrated in FIG. 7, a combination pattern of features in which the feature of the item "A" has "1", the feature of the item "B" has "1", and the feature of the item "C" has "1" is defined in the condition part of the rule R1. Among the positive sample set 211 of the training data illustrated in FIG. 4 and the negative sample set 212 of the training data illustrated in FIG. 5, the positive samples P1 and P4 of the training data match such a combination pattern of features. As a result, the positive samples P1 and P4 of the training data are detected as samples corresponding to the rule R1.

The mining unit 15C is a processing unit that executes mining. As one form of embodiment, the mining unit 15C executes re-mining in the dataset 21 of the training data exclusively for the sample of the training data detected by the detection unit 15B and the sample of the training data for which the user specification 41 is accepted by the acceptance unit 15A. Hereinafter, the sample of the training data detected by the detection unit 15B and the sample of the training data for which the user specification is accepted by the acceptance unit 15A will be sometimes collectively referred to by the term "samples to be improved".

The types of labels included in such samples to be improved can be divided into the three cases 1 to 3 mentioned below. A case where the samples to be improved include only a sample of the training data to which the label of the positive example is assigned can be given as the case 1. A case where only a sample of the training data to which the label of the negative example is assigned is included can be given as the case 2. A case where both of a sample of the training data to which the label of the positive example is assigned and a sample of the training data to which the label of the negative example is assigned are included can be given as the case 3.

For example, when re-mining is executed in the case 1, the mining unit 15C executes re-mining using the samples to be improved and all negative samples of the training data. This enables to extract the positive rule whose conclusion part corresponds to the class of positive examples. In addition, when re-mining is executed in the case 2, the mining unit 15C executes re-mining using the samples to be improved and all positive samples of the training data. This enables to extract the negative rule whose conclusion part corresponds to the class of negative examples. Furthermore, when re-mining is executed in the case 3, the mining unit 15C executes re-mining using a sample to which the label of the positive example is assigned among the samples to be improved and all negative samples of the training data. Furthermore, the mining unit 15C executes re-mining using a sample to which the label of the negative example is assigned among the samples to be improved and all positive samples of the training data. This enables to extract the positive rule whose conclusion part corresponds to the class of positive examples and the negative rule whose conclusion part corresponds to the class of negative examples.

Here, at the time of executing re-mining, the lower limit value of "Support", the lower limit value of "Confidence", or both of these lower limit values can be changed. Merely as an example, the mining condition can be more relaxed than the mining condition at the time of mining of the set of initial rules. For example, the mining unit 15C can lower the lower limit value of "Support" at the time of re-mining than the lower limit value of "Support" at the time of mining of the set of initial rules. In addition, the mining unit 15C can lower the lower limit value of "Confidence" at the time of re-mining than the lower limit value of "Confidence" at the time of mining of the set of initial rules. By relaxing the mining conditions in such a manner, a situation in which it is infeasible to procure a new rule 42n due to insufficient support for the sample or noise of the sample may be suppressed, which in turn enables to raise the possibility that the new rule 42n can be procured.

For example, according to the example of the user specification 41 illustrated in FIG. 3, the samples P1 and P4 of the training data detected by the detection unit 15B and the sample P2 of the training data of which the user specification is accepted by the acceptance unit 15A are assumed as samples I1 to be improved.

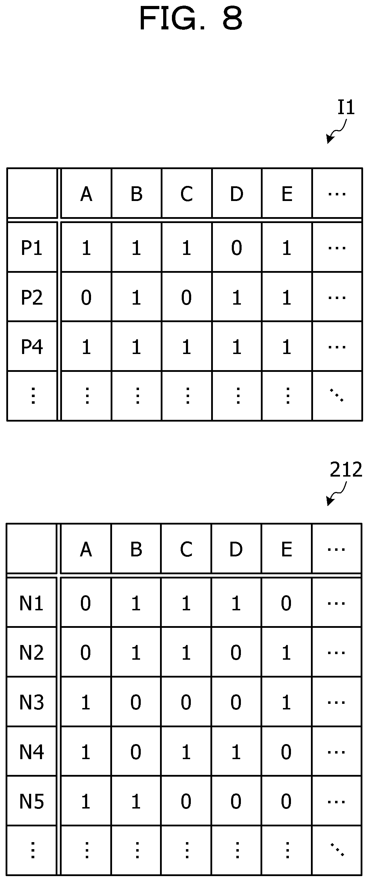

Such samples I1 to be improved include only positive samples of the training data, such as the positive samples P1 and P4 and the positive sample P2. Since this case falls under the case 1 described above, the re-mining of the positive rules illustrated in FIG. 8 is executed.

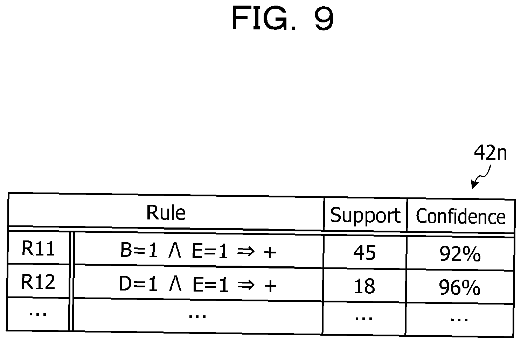

FIG. 8 is a diagram illustrating an example of re-mining of positive rules. FIG. 8 illustrates an example in which re-mining is executed under circumstances in which the lower limit value of "Support" is set to "10" and also the lower limit value of "Confidence" is set to "90%" lowered from "100%" at the time of mining, merely as an example. As illustrated in FIG. 8, the re-mining of the positive rules is executed using the samples I1 to be improved and the negative sample set 212 of the training data. As a result of such re-mining, the positive rules illustrated in FIG. 9 are obtained as the new rules 42n.

FIG. 9 is a diagram illustrating an example of new rules. As illustrated in FIG. 9, two new rules 42n of rules R11 and R12 are obtained as a result of re-mining. Among them, a combination pattern of features in which the feature of the item "B" has "1" and the feature of the item "E" has "1" is defined in the condition part of the rule R11, and also the class of positive examples, that is, the class of the positive "+" is defined in the conclusion part of the rule R11. In addition, a combination pattern of features in which the feature of the item "D" has "1" and the feature of the item "E" has "1" is defined in the condition part of the rule R12, and also the class of positive examples, that is, the class of the positive "+" is defined in the conclusion part of the rule R12. These two positive rules of the rules R11 and R12 are obtained as the new rules 42n.

In this manner, the new rule 42n that is an alternative to the rule R1 that is unlikely to make the user understand or feel reasonable and furthermore, the new rule 42n that supplements the explanation of the sample P2 can be procured as the rules R11 and R12. Note that the new rules 42n can not only generate the machine learning model 43 but also be presented to the client terminal 30.

The update unit 15D is a processing unit that updates the rule set. As one form of embodiment, the update unit 15D updates the set 22 of initial rules, based on the new rules 42n obtained as a result of re-mining by the mining unit 15C. For example, in the set 22 of initial rules, a rule for which the user specification 41 has been accepted is deleted, and also the new rules 42n obtained by re-mining by the mining unit 15C are added. Merely as an example, when the set 22 of initial rules illustrated in FIG. 6 is updated based on the new rules 42n illustrated in FIG. 9, the new rules 42n illustrated in FIG. 9 are added to the set 22 of initial rules illustrated in FIG. 6. Furthermore, the rule R1 accepted by the user specification 41 in the set 22 of initial rules illustrated in FIG. 6 is deleted. This updates the set 22 of initial rules to the updated rule set 42.

The updated rule set 42 obtained in this manner can not only generate the machine learning model 43 but also be presented to the client terminal 30.

The generation unit 15E is a processing unit that generates a machine learning model. As one form of embodiment, the generation unit 15E employs each of the rules included in the updated rule set 42 as explanatory variables for the machine learning model, employs the labels for each sample included in the dataset 21 as objective variables for the machine learning model, and determines weights to be assigned to each rule by regression analysis or the like. This allows the machine learning model 43 based on the updated rule set 42 to be generated.

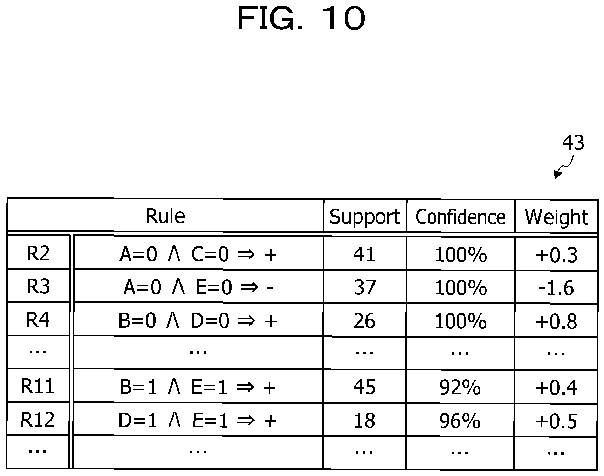

FIG. 10 is a diagram illustrating an example of the second model data. FIG. 10 illustrates, as an example of the machine learning model 43 based on the updated rule set 42, a rule set to which weights of five rules of the rules R2 to R4 and the rules R11 and R12 are assigned for each of the rules. Merely as an example, such a machine learning model 43 can function as a multiple regression model in which each of the rules R2 to R4 and the rules R11 and R12 is employed as explanatory variables and the weights assigned to each rule are employed as partial regression coefficients.

For example, a verification result as to whether or not the features corresponding to the items "A" to "E" included in the input data satisfy the condition part of each rule of the rules R2 to R4 and the rules R11 and R12 can be input to the machine learning model 43.

Among the five explanatory variables of the rules R2 to R4 and the rules R11 and R12, "1" is input to the explanatory variable satisfying the condition part of the rule, while "0" is input to the explanatory variable not satisfying the condition part of the rule, whereby the total sum of the weightings is output from the machine learning model 43.

At this time, when the total sum of the weightings output by the machine learning model 43 is equal to or greater than zero, the input data is classified into the class of positive examples, that is, the class of the positive "+". On the other hand, when the total sum of the weightings is smaller than zero, the input data is classified into the class of negative examples, that is, the class of the negative "-".

The machine learning model 43 obtained in this manner can be, for example, presented to the client terminal 30 or saved in the storage unit 13 as the second model data.

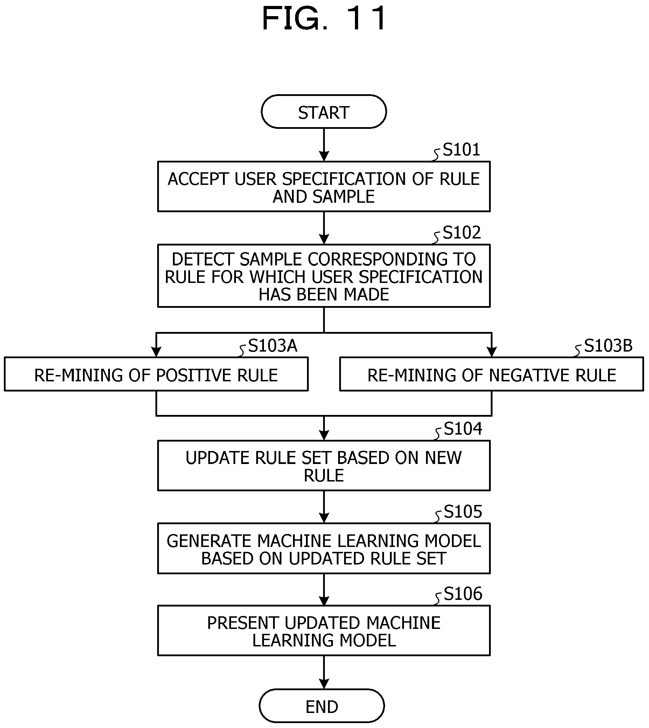

FIG. 11 is a flowchart illustrating a procedure of rule update processing according to the first embodiment. The processing illustrated in FIG. 11 can be started, merely as an example, when a request relating to rule update is accepted from the client terminal 30.

As illustrated in FIG. 11, the acceptance unit 15A accepts, as the user specification 41, specification of a rule that is unlikely to make the user understand or feel reasonable, specification of a sample of the training data that the machine learning model is not capable of sufficiently explaining, and the like (step S101).

Subsequently, the detection unit 15B detects a sample of the training data that matches the combination pattern of the features included in the condition part of the rule for which the user specification 41 has been accepted in step S101, from the sample set included in the dataset 21 of the training data (step S102).

Thereafter, the mining unit 15C executes re-mining exclusively for the samples to be improved including the sample of the training data detected in step S102 and the sample of the training data for which the user specification 41 has been accepted in step S101.

That is, the mining unit 15C executes re-mining using a sample to which the label of the positive example is assigned among the samples to be improved and all negative samples of the training data (step S103A).

In parallel with this, the mining unit 15C executes re-mining using a sample to which the label of the negative example is assigned among the samples to be improved and all positive samples of the training data (step S103B).

Note that, when the samples to be improved include no sample to which the label of the positive example is assigned, the processing in step S103A is skipped, while the processing in step S103B is skipped when the samples to be improved include no sample to which the label of the negative example is assigned.

Thereafter, the update unit 15D adds the new rules 42n obtained by the re-mining in steps S103A and S103B to the set 22 of initial rules and also deletes the rule for which the user specification 41 has been accepted, from the set 22 of initial rules (step S104). This updates the set 22 of initial rules to the updated rule set 42.

After that, the generation unit 15E employs each of the rules included in the updated rule set 42 as explanatory variables, employs the labels for each sample included in the dataset 21 as objective variables, and determines weights to be assigned to each rule by regression analysis or the like (step S105). This generates the machine learning model 43 based on the updated rule set 42.

Then, the generation unit 15E presents the machine learning model 43 based on the updated rule set 42, which has been generated in step S105, to the client terminal 30 or the like (step S106) and ends the processing.

As described above, the rule update function according to the present embodiment performs re-mining to procure a new rule that is an alternative to the initial rule, in the sample set of the training data used to generate the machine learning model, exclusively for a sample corresponding to the initial rule for which the user specification has been accepted. This enables to procure a new rule that is an alternative to a rule that is unlikely to make the user understand or feel reasonable. Therefore, according to the rule update function according to the present embodiment, enhancement in reasonableness of the machine learning model based on a rule set may be achieved.

Furthermore, the rule update function according to the present embodiment can procure a new rule that supplements the explanation of the sample of the training data for which the explanation from the machine learning model is insufficient. For this reason, according to the rule update function according to the present embodiment, interpretability (explainability) of the machine learning model based on a rule set may be further raised.

### [Second Embodiment]

Incidentally, while the embodiment relating to the disclosed device has been described above, the present invention may be carried out in a variety of different modes apart from the embodiment described above. Thus, in the following, other embodiments included in the present invention will be described.

In addition, each of the illustrated constituent members in each of the devices does not necessarily have to be physically configured as illustrated in the drawings. That is, specific modes of distribution and integration of each device are not limited to those illustrated, and the whole or a part of each device can be configured by being functionally or physically distributed and integrated in any unit, according to various loads, usage circumstances, and the like. For example, the acceptance unit 15A, the detection unit 15B, the mining unit 15C, the update unit 15D, or the generation unit 15E may be coupled through a network as an external device of the server device 10. In addition, different devices may each include the acceptance unit 15A, the detection unit 15B, the mining unit 15C, the update unit 15D, or the generation unit 15E and may be coupled to a network to cooperate with each other, whereby the above-described function of the server device 10 may be achieved. In addition, different devices may each have all or some of the dataset 21, the first model data 23, and the second model data 43 stored in the storage unit and may be coupled to a network to cooperate with each other, whereby the above-described function of the server device 10 may be achieved.

### [Rule Update Program]

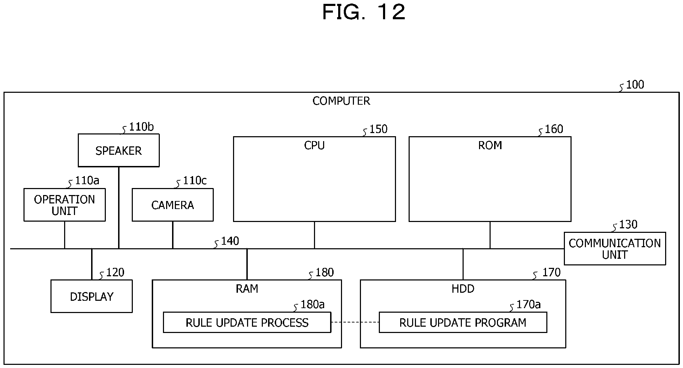

In addition, various types of processing described in the embodiments described above can be achieved by executing a program prepared in advance in a computer such as a personal computer or a workstation. Thus, hereinafter, an example of a computer that executes the rule update program having functions similar to the functions in the first and second embodiments will be described with reference to FIG. 12.

FIG. 12 is a diagram illustrating a hardware configuration example. As illustrated in FIG. 12, a computer 100 includes an operation unit 110a, a speaker 110b, a camera 110c, a display 120, and a communication unit 130. This computer 100 further includes a central processing unit (CPU) 150, a read only memory (ROM) 160, a hard disk drive (HDD) 170, and a random access memory (RAM) 180. These units 110 to 180 are coupled to each other via a bus 140.

As illustrated in FIG. 12, the HDD 170 stores a rule update program 170a that boasts functions similar to the functions of the acceptance unit 15A, the detection unit 15B, the mining unit 15C, the update unit 15D, and the generation unit 15E described in the above first embodiment. This rule update program 170a may be integrated or separated similarly to the respective constituent members of the acceptance unit 15A, the detection unit 15B, the mining unit 15C, the update unit 15D, and the generation unit 15E illustrated in FIG. 1. That is, all pieces of data indicated in the above first embodiment do not necessarily have to be stored in the HDD 170, and it is sufficient that data for use in processing is stored in the HDD 170.

Under such an environment, the CPU 150 reads the rule update program 170a from the HDD 170 and then loads the read rule update program 170a into the RAM 180. As a result, the rule update program 170a functions as a rule update process 180a as illustrated in FIG. 12. This rule update process 180a loads various types of data read from the HDD 170 into an area allocated to the rule update process 180a in a storage area included in the RAM 180 and executes various types of processing using these various types of loaded data. For example, as an example of the processing to be executed by the rule update process 180a, the processing illustrated in FIG. 11, and the like are included. Note that all the processing units indicated in the first embodiment described above do not necessarily have to operate in the CPU 150, and it is sufficient that a processing unit corresponding to processing to be executed is virtually achieved.

Note that the rule update program 170a described above does not necessarily have to be stored in the HDD 170 or the ROM 160 from the beginning. For example, each program is stored in a "portable physical medium" to be inserted into the computer 100, such as a flexible disk, which is a so-called FD, a compact disc read only memory (CD-ROM), a digital versatile disc (DVD) disk, a magneto-optical disk, or an integrated circuit (IC) card. Then, the computer 100 may acquire each program from these portable physical media to execute each acquired program. In addition, each program may be stored in another computer, a server device, or the like coupled to the computer 100 via a public line, the Internet, a LAN, a wide area network (WAN), or the like, and the computer 100 may acquire and execute each program from such another computer, server device, and the like.

### CITATION LIST

### NON-PATENT DOCUMENT

Non-Patent Document 1: Satoshi Hara and Takanori Maehara. Finding alternate features in lasso. In NIPS 2016 workshop on Interpretable Machine Learning for Complex Systems, 2016.
Non-Patent Document 2: Satoshi Hara and Takanori Maehara. Enumerate lasso solutions for feature selection. In Proceedings of the Thirty-First AAAI Conference on Artificial Intelligence, AAAI '17, page 1985-1991. AAAI Press, 2017.

### REFERENCE SIGNS LIST

- 10: Server device
- 11: Communication interface unit
- 13: Storage unit
- 15: Control unit
- 15A: Acceptance unit
- 15B: Detection unit
- 15C: Mining unit
- 15D: Update unit
- 15E: Generation unit
- 21: Dataset
- 22: Set of initial rules
- 23: First model data
- 30: Client terminal
- 41: User specification
- 42: Updated rule set
- 43: Second model data

## Claims

1. A rule update program for causing a computer to execute a process comprising:
accepting user specification for at least a part of rules included in a rule set generated as a result of first mining that uses training data;
detecting, from the training data, sample data that corresponds to the rules for which the user specification has been accepted; and
acquiring a new rule by executing second mining by using the training data limited to the sample data that corresponds to the rules for which the user specification has been accepted.

2. The rule update program according to claim 1, wherein
the accepting includes accepting specification of any piece of the sample data from the training data, as the user specification, and
the acquiring includes executing the second mining by using the training data limited to the sample data detected in the detecting and the sample data for which the user specification has been accepted.

3. The rule update program according to claim 1, wherein
the training data includes a set of sample data to which labels of positive examples are assigned and the set of the sample data to which the labels of negative examples are assigned, and
the acquiring includes acquiring the new rule of which a conclusion part of the rules corresponds to a class of the positive examples, by executing the second mining by using the set of the sample data to which the labels of the positive examples are assigned in the sample data detected in the detecting and the sample data to which the labels of the negative examples are assigned.

4. The rule update program according to claim 1, wherein
the training data includes a set of sample data to which labels of positive examples are assigned and the set of the sample data to which the labels of negative examples are assigned, and
the acquiring includes acquiring the new rule of which a conclusion part of the rules corresponds to a class of the negative examples, by executing the second mining by using the sample data to which the labels of the negative examples are assigned in the sample data detected in the detecting and the set of the sample data to which the labels of the positive examples are assigned.

5. The rule update program according to claim 1, wherein
the acquiring includes executing the second mining, based on a lower limit value of a support level smaller than the lower limit value of the support level used at a time of the first mining.

6. The rule update program according to claim 1, wherein
the acquiring includes executing the second mining, based on a lower limit value of a confidence level smaller than the lower limit value of the confidence level used at a time of the first mining.

7. The rule update program according to claim 1, for causing the computer to further execute the process comprising
updating the rule set by adding the new rule to the rule set and also deleting the rules for which the user specification has been accepted, from the rule set.

8. The rule update program according to claim 7, for causing the computer to further execute the process comprising
generating a machine learning model, by executing machine learning that uses the training data, based on the rule set updated in the updating.

9. The rule update program according to claim 8, wherein
the generating includes generating the machine learning model, by employing each of the rules included in the rule set updated in the updating as explanatory variables, employing labels assigned to the training data as objective variables, and determining weights to be assigned to each of the rules by the machine learning.

10. A rule update method implemented by a computer, the method comprising:
accepting user specification for at least a part of rules included in a rule set generated as a result of first mining that uses training data;
detecting, from the training data, sample data that corresponds to the rules for which the user specification has been accepted; and
acquiring a new rule by executing second mining by using the training data limited to the sample data that corresponds to the rules for which the user specification has been accepted.

11. The rule update method according to claim 10, wherein
the accepting includes accepting specification of any piece of the sample data from the training data, as the user specification, and
the acquiring includes executing the second mining by using the training data limited to the sample data detected in the detecting and the sample data for which the user specification has been accepted.

12. The rule update method according to claim 10, wherein
the training data includes a set of sample data to which labels of positive examples are assigned and the set of the sample data to which the labels of negative examples are assigned, and
the acquiring includes acquiring the new rule of which a conclusion part of the rules corresponds to a class of the positive examples, by executing the second mining by using the set of the sample data to which the labels of the positive examples are assigned in the sample data detected in the detecting and the sample data to which the labels of the negative examples are assigned.

13. The rule update method according to claim 10, wherein
the training data includes a set of sample data to which labels of positive examples are assigned and the set of the sample data to which the labels of negative examples are assigned, and
the acquiring includes acquiring the new rule of which a conclusion part of the rules corresponds to a class of the negative examples, by executing the second mining by using the sample data to which the labels of the negative examples are assigned in the sample data detected in the detecting and the set of the sample data to which the labels of the positive examples are assigned.

14. The rule update method according to claim 10, wherein
the acquiring includes executing the second mining, based on a lower limit value of a support level smaller than the lower limit value of the support level used at a time of the first mining.

15. The rule update method according to claim 10, wherein
the acquiring includes executing the second mining, based on a lower limit value of a confidence level smaller than the lower limit value of the confidence level used at a time of the first mining.

16. The rule update method according to claim 10, the method further comprising
updating the rule set by adding the new rule to the rule set and also deleting the rules for which the user specification has been accepted, from the rule set.

17. The rule update method according to claim 16, the method further comprising
generating a machine learning model, by executing machine learning that uses the training data, based on the rule set updated in the updating.

18. The rule update method according to claim 17, wherein
the generating includes generating the machine learning model, by employing each of the rules included in the rule set updated in the updating as explanatory variables, employing labels assigned to the training data as objective variables, and determining weights to be assigned to each of the rules by the machine learning.

19. A rule update apparatus comprising a control unit configured to perform processing including:
accepting user specification for at least a part of rules included in a rule set generated as a result of first mining that uses training data;
detecting, from the training data, sample data that corresponds to the rules for which the user specification has been accepted; and
acquiring a new rule by executing second mining by using the training data limited to the sample data that corresponds to the rules for which the user specification has been accepted.

20. The rule update apparatus according to claim 19, wherein
the accepting includes accepting specification of any piece of the sample data from the training data, as the user specification, and
the acquiring includes executing the second mining by using the training data limited to the sample data detected in the detecting and the sample data for which the user specification has been accepted.
